# FASCICULE DE BREVET EUROPEEN

(11) **EP 3 086 368 B1**
(45) Date de publication et mention de la délivrance du brevet: **28.12.2022**
(21) Numéro de dépôt: 16165837.2
(22) Date de dépôt: 18.04.2016
(51) Int. Cl.: H01L 23/58, H04L 9/00, G09C 1/00

(54) **PUCE ELECTRONIQUE COMPORTANT UNE FACE ARRIERE PROTEGEE**
ELEKTRONISCHER CHIP, DER EINE GESCHÜTZTE RÜCKSEITE UMFASST
ELECTRONIC CHIP COMPRISING A PROTECTED REAR SURFACE

(30) Priorité: 20.04.2015 FR 1553505
(43) Date de publication de la demande: 26.10.2016
(73) Titulaire: Commissariat à l'Énergie Atomique et aux Énergies Alternatives, 75015 Paris (FR)
(72) Inventeur: CHARBONNIER, Jean, 38000 GRENOBLE (FR); BOREL, Stéphan, 38920 CROLLES (FR)
(74) Mandataire: Brevalex

(56) Documents cités:
- EP-A1- 1 400 887
- FR-A1- 2 970 116
- US-A- 5 369 299
- US-A1- 2010 026 326
- US-A1- 2010 187 527
- US-A1- 2015 061 120

## Description

### DOMAINE TECHNIQUE ET ART ANTÉRIEUR

L'invention concerne le domaine de la sécurité et de la protection des puces électroniques, et porte sur une puce électronique comportant des moyens protégeant la face arrière de la puce électronique et permettant d'empêcher l'accès au circuit électronique de la puce depuis sa face arrière. L'invention s'applique pour tout type de puce électronique utilisée notamment dans une carte à puce : puce de téléphonie mobile, de carte bancaire, de carte santé, de document d'identité, etc.

Les attaques que peut subir une puce électronique ont généralement pour but d'accéder à des données confidentielles stockées dans le circuit électronique de la puce afin de la cloner, de modifier les informations stockées, d'usurper l'identité de son possesseur, etc. Une puce électronique peut être attaquée de multiples manières : chimique, physique, laser, électromagnétique, électrique, etc.

La face avant d'une puce électronique, c'est-à-dire la face de la puce au niveau de laquelle se trouve le circuit électronique, est généralement protégée par de multiples moyens comme par exemple une couche de protection protégeant la puce contre les attaques intrusives par sonde ionique focalisée (gravure FIB ou « Focused Ion Beam »), ainsi que d'autres protections contre les attaques par perturbation (« glitch »), par observation électromagnétique, ou par cryptanalyse, etc.

Par contre, la face arrière de la puce électronique est généralement mal protégée. Sans moyens de protection de cette face arrière, rien ne s'oppose à la mise en œuvre d'un amincissement du substrat de la puce au niveau de sa face arrière, ou à la réalisation de défaillances électroniques ou électriques au laser infrarouge (« glitch »), le silicium (qui est le matériau généralement utilisé) du substrat étant transparent aux longueurs d'onde caractéristiques de l'infrarouge. L'accès au circuit électronique de la puce obtenu permet ensuite de réaliser par exemple une lecture des données via l'obtention de la clé de cryptage.

Généralement, seuls des détecteurs de lumière (photodiodes) formés au niveau des transistors du circuit protègent la puce vis-à-vis des attaques laser en face arrière de manière plus ou moins efficace selon les cas (la détection d'une attaque par ces capteurs doit normalement indiquer qu'il y a eu intrusion dans la puce par faisceau laser, ce qui déclenche l'effacement des données contenues dans la puce).

L'accès aux informations secrètes des puces électroniques est réalisable non seulement par des perturbations par stimulation laser mais aussi grâce à la réalisation de plots de contacts de type « probing » directement connectés à l'intérieur du circuit électronique, et cela grâce à la modification physique du circuit par une sonde ionique focalisée (faisceau FIB).

Le document DE 100 65 339 A1 décrit la protection d'une face arrière d'une puce électronique via la réalisation de plusieurs capacités au niveau de cette face arrière. En cas d'altération de la face arrière de la puce liée à une attaque, le changement de la valeur des capacités est détecté et une action, telle qu'une mise en défaut de la puce, est alors réalisée. Une telle protection n'est toutefois pas adaptée pour protéger la puce vis-à-vis d'attaques par ablation par faisceau d'ions. En effet, même avec une conception optimisée, la sensibilité des capacités en face arrière n'est pas suffisante à cause de leur surface totale très grande, et une altération de ces capacités par des faisceaux d'ions est très difficilement détectable. Typiquement, une attaque par faisceau d'ions est réalisée sur une fenêtre de gravure de 50 µm de côté, soit une surface égale à 2,5.10⁻³ mm². En considérant une puce de taille standard de surface égale à 4 mm², la fenêtre de gravure représente une variation de moins de 1/1000 de la surface de la puce.

Le document US 8 110 894 B2 décrit une puce électronique dont la face avant comporte une inductance qui, par couplage inductif à travers le substrat de la puce, détecte la présence d'un plan de masse conducteur disposé sur la face arrière de la puce. Une altération par une attaque de ce plan de masse conducteur induit une variation du couplage inductif entre les faces avant et arrière de la puce, ce qui conduit à une mise en défaut de la puce.

Cette solution offre toutefois un niveau de protection limité car une telle protection de la face arrière de la puce est assez simple et le plan métallique conducteur est facilement copiable.

Les faces arrières de ces puces électroniques nécessitent donc une protection qui soit efficace contre les différentes attaques possibles.

Le document US 2010/187527 A1 propose une protection de face arrière d'un substrat par une couche conductrice. Des éléments conducteurs traversent le substrat et sont en contact avec cette couche de protection pour former des résistances électriques de protection. Un circuit de protection, auquel sont reliés les éléments conducteurs, est formé en face avant du substrat. La couche de protection peut être isolée du substrat par une couche diélectrique.

### EXPOSÉ DE L'INVENTION

Un but de la présente invention est de proposer une puce électronique dont la face arrière soit efficacement protégée vis-à-vis de différents types d'attaque, notamment vis-à-vis d'attaques par amincissement, par sonde ionique focalisée ou par gravure chimique de la face arrière de la puce.

Pour cela, l'invention propose une puce électronique selon la revendication 1.

La face arrière d'une telle puce électronique est donc protégée grâce à l'élément résistif couplé aux deux couches de protection.

Si un amincissement mécanique ou un polissage de la face arrière de la puce électronique est mis en œuvre, cet amincissement provoque nécessairement, après la destruction de la deuxième couche de protection, celle de l'élément résistif. Cette destruction de l'élément résistif forme alors un circuit ouvert qui est détecté par le circuit électronique de la puce qui pourra, par exemple, se mettre en défaut.

Si une gravure chimique est mise en œuvre dans le but d'atteindre le circuit électronique depuis la face arrière de la puce, l'agent de gravure chimique utilisé pour graver le substrat, par exemple une solution à base de, ou comprenant du, KOH et/ou TMAH et/ou d'acide fluorhydrique et/ou d'acide nitrique, détruit également les deux couches de protection, et notamment la première couche de protection qui supporte mécaniquement l'élément résistif, en raison de la nature du ou des matériaux de ces couches de protection qui subissent également la gravure mise en œuvre pour graver le substrat. Cette destruction des couches de protection engendre donc également une destruction de l'élément résistif qui n'est plus supporté mécaniquement par la première couche de protection, cette destruction étant détectée par le circuit électronique de la puce.

Lors d'une telle gravure chimique, notamment depuis les parois latérales des couches de protection, la première couche de protection est donc gravée chimiquement même si la deuxième couche de protection est plus difficilement attaquable par l'agent de gravure utilisé. Du fait que le matériau diélectrique de la première couche de protection présente une résistance de gravure inférieure ou égale à celle du matériau diélectrique de la deuxième couche de protection, la première couche de protection est gravée plus rapidement que la deuxième couche de protection (ou à la même vitesse lorsque les deux couches de protection sont de même nature), ce qui implique qu'une détection de l'intrusion ou de l'attaque se produit (via la destruction de l'élément résistif qui n'est plus supporté mécaniquement) avant que l'élément résistif ne puisse être atteint et modifié par cette gravure depuis la deuxième couche de protection. En outre, l'attaque chimique de la première couche de protection entraîne généralement la suppression d'au moins une partie de la deuxième couche de protection.

Avantageusement, la première couche de protection peut être plus fine, ou moins épaisse, que la deuxième couche de protection.

La résistance à la gravure chimique peut être quantifiée par la vitesse d'attaque, ou de gravure, ou de dissolution, du matériau en µm/min pour une solution aqueuse ou une chimie donnée correspondant à l'agent de gravure chimique. Cette vitesse peut être mesurée par la mesure de l'épaisseur d'une couche avant et après son exposition à l'agent de gravure chimique pendant une durée déterminée. Le rapport de la différence d'épaisseur mesurée sur la durée donne la vitesse d'attaque.

Enfin, le matériau diélectrique des couches de protection rend les attaques par sonde ionique focalisée difficiles. En effet, lorsque le matériau diélectrique des couches de protection est soumis à un faisceau d'ions, ces ions s'accumulent dans le matériau diélectrique à l'endroit ciblé par le faisceau, ce qui créé une charge électrique localisée qui entraine un décalage du faisceau d'ions. L'ablation de la matière devient alors très difficile voire impossible car le faisceau d'ions dévie et ne parvient pas à pénétrer en profondeur dans le matériau diélectrique pour atteindre le circuit électronique. En outre, même si un faisceau d'ions à haute énergie est utilisé pour traverser le matériau diélectrique des couches de protection, ce faisceau d'ions endommage alors l'élément résistif, modifiant ainsi sa résistance électrique et déclenchant donc une détection de cette attaque par le circuit électronique de la puce.

L'invention propose donc une puce électronique comportant en face arrière une combinaison d'une structure de protection active (l'élément résistif) et d'une structure de protection passive (les couches de protection) tout en rendant ce système de protection totalement opaque vis-à-vis d'une attaque de la face arrière de la puce électronique.

La partie du circuit électronique en regard de laquelle l'élément résistif est disposé peut être n'importe quelle partie du circuit électronique, et notamment une partie de routage électrique, ou une zone active comportant par exemple au moins un transistor et/ou au moins une mémoire.

Au moins le matériau diélectrique de la deuxième couche de protection peut être résistant à un polissage mécanique et/ou opaque vis-à-vis d'un rayonnement infrarouge et/ou résistant à une attaque par sonde ionique focalisée.

Le choix d'un matériau diélectrique opaque vis-à-vis d'un rayonnement infrarouge forme une protection supplémentaire vis-à-vis des attaques par rayonnement infrarouge, par exemple par laser infrarouge. L'expression « opaque vis-à-vis d'un rayonnement infrarouge » désigne par exemple un matériau ayant un coefficient de transmission inférieur à environ 20% vis-à-vis du rayonnement infrarouge. L'expression « résistant à une attaque par sonde ionique focalisée » désigne par exemple un matériau dont la vitesse d'abrasion par la sonde ionique focalisée est inférieure à environ 0,5 µm/min pour une fenêtre d'attaque de dimensions 50 × 50 µm².

Au moins le matériau diélectrique de la deuxième couche de protection peut avoir un module d'Young supérieur ou égal à environ 1 GPa. Un tel module d'Young confère une bonne résistance vis-à-vis d'un polissage mécanique ou d'un amincissement mécanique.

Le matériau diélectrique de la première couche de protection et/ou le matériau diélectrique de la deuxième couche de protection peut comporter de l'époxy et/ou peut comporter du silicone. Le choix de tels matériaux pour réaliser les couches de protection est avantageux car ils permettent de réaliser facilement les couches de protection de part et d'autre de l'élément résistif.

La première couche de protection et/ou la deuxième couche de protection peut comporter en outre des particules d'un premier matériau différent du matériau diélectrique de la première couche de protection et/ou du matériau diélectrique de la deuxième couche de protection, et qui sont réparties dans l'ensemble du matériau diélectrique de la première couche de protection et/ou du matériau diélectrique de la deuxième couche de protection. De telles particules peuvent notamment former une protection supplémentaire vis-à-vis d'une gravure par FIB de la ou des couches de protection qui comportent ces particules. Cette protection vis-à-vis d'une gravure par FIB peut être obtenue grâce à la dureté importante du premier matériau des particules (par exemple de l'alumine ayant une dureté Vickers de l'ordre de 1500 kgf.mm⁻²), cette dureté étant par exemple supérieure ou égale à 100 kgf.mm⁻² . Le premier matériau peut également être tel que les particules perturbent un faisceau laser utilisé sur la ou les couches de protection qui comportent ces particules.

Avantageusement, le premier matériau des particules peut comporter ou être à base de silice et/ou d'alumine.

De plus, le premier matériau des particules peut être recouvert d'un deuxième matériau réfléchissant vis-à-vis d'un rayonnement lumineux et/ou électronique et/ou ionique, par exemple un matériau métallique. Ce revêtement réfléchissant permet de perturber encore plus un faisceau lumineux (par exemple laser) et/ou électronique et/ou ionique (FIB) qui serait appliqué sur le matériau diélectrique des couches de protection. Ces particules réfléchissantes sont avantageusement utilisées pour la deuxième couche de protection qui présente une face libre formant la face arrière de la puce électronique. Le deuxième matériau peut être qualifié de réfléchissant lorsqu'il réfléchit au moins 50 % du rayonnement lumineux et/ou électronique et/ou ionique.

L'élément résistif comporte au moins une piste conductrice ayant au moins un motif de serpentin. Une telle configuration de l'élément résistif permet de rendre difficile voire d'empêcher la réalisation d'un pont métallique ou d'un court-circuit entre deux parties de l'élément résistif (« détour de fil ») dans le but d'accéder à la partie de la face arrière se trouvent entre ces deux parties de l'élément résistif sans modifier la valeur de la résistance électrique de l'élément résistif. De façon générale, le motif de l'élément résistif peut recouvrir au maximum la première couche de protection, et recouvre par exemple toute la partie de la première couche de protection se trouvant en regard de la partie du circuit électronique en face de laquelle se trouve l'élément résistif pour détecter au mieux une attaque en face arrière de la puce électronique.

De plus, la piste conductrice peut avoir une largeur comprise entre environ 5 µm et 50 µm, et/ou des portions de la piste conductrice qui sont voisines et parallèles l'une par rapport à l'autre peuvent être espacées l'une de l'autre d'une distance comprise entre environ 5 µm et 50 µm. Une telle configuration de l'élément résistif laisse ainsi trop peu d'espace pour une attaque par un faisceau FIB sans que cela engendre une modification importante de la valeur de la résistance électrique de l'élément résistif.

La puce électronique peut comporter en outre une couche électriquement conductrice disposée entre la face arrière du substrat et la première couche de protection. Une telle couche électriquement conductrice forme un écran de protection supplémentaire vis-à-vis d'un faisceau laser et/ou d'autres rayonnements électromagnétiques qui peuvent être utilisés pour attaquer la face arrière de la puce électronique. Pour le dépôt de cette couche électriquement conductrice, la face arrière du substrat peut être électriquement isolante ou rendue électriquement isolante par le dépôt préalable d'une couche électriquement isolante sur cette face arrière.

La puce électronique peut comporter en outre au moins deux premiers vias conducteurs traversant le substrat et reliant électriquement l'élément résistif au circuit électronique.

En variante, la puce électronique peut comporter en outre un élément inductif disposé au niveau de la face avant du substrat et relié électriquement au circuit électronique, et l'élément résistif peut faire partie d'un circuit RLC (c'est-à-dire un circuit électrique présentant une résistance électrique, une inductance et une capacité) apte à être couplé de manière inductive avec ledit élément inductif tel qu'une modification d'une valeur d'une inductance de l'élément inductif induise une modification d'une propriété électrique du circuit RLC. Ainsi, l'élément résistif est relié au circuit électronique de manière inductive sans faire appel à des vias conducteurs traversant le substrat.

Dans ce cas, l'élément inductif peut être intégré au circuit électronique.

De plus, l'élément résistif peut former une bobine dont les extrémités sont reliées électriquement l'une à l'autre. Selon un mode avantageux, la couche électriquement conductrice disposée entre la face arrière du substrat et la première couche de protection peut relier électriquement les extrémités de la bobine.

La puce électronique peut comporter en outre au moins un deuxième via et/ou une tranchée traversant la face arrière du substrat et une partie de l'épaisseur du substrat, et disposé au moins en regard du circuit électronique tel qu'une paroi de fond du deuxième via et/ou de la tranchée soit espacée du circuit électronique d'une distance non nulle. Ce ou ces deuxièmes vias et/ou tranchées qui ne traverse(nt) pas complètement le substrat forme(nt) dans le substrat une structure d'affaiblissement mécanique conférant une protection supplémentaire vis-à-vis d'un amincissement mécanique ou un polissage de la puce depuis sa face arrière, ainsi que vis-à-vis d'une attaque par FIB ou par gravure chimique de la face arrière de la puce. Avantageusement les parois latérales et la paroi de fond de le deuxième via et/ou de la tranchée peuvent être recouvertes par la couche électriquement conductrice disposée sur la face arrière du substrat.

L'invention concerne également un procédé de réalisation d'une puce électronique selon la revendication 14.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente une vue en coupe d'une puce électronique, objet de la présente invention, selon un premier mode de réalisation ;
- la figure 2 représente une vue de dessus de l'élément résistif de la puce électronique, objet de la présente invention ;
- la figure 3 représente une vue en coupe d'une puce électronique, objet de la présente invention, selon un deuxième mode de réalisation ;
- les figures 4A à 4N représentent les étapes d'un procédé de réalisation d'une puce électronique, également objet de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

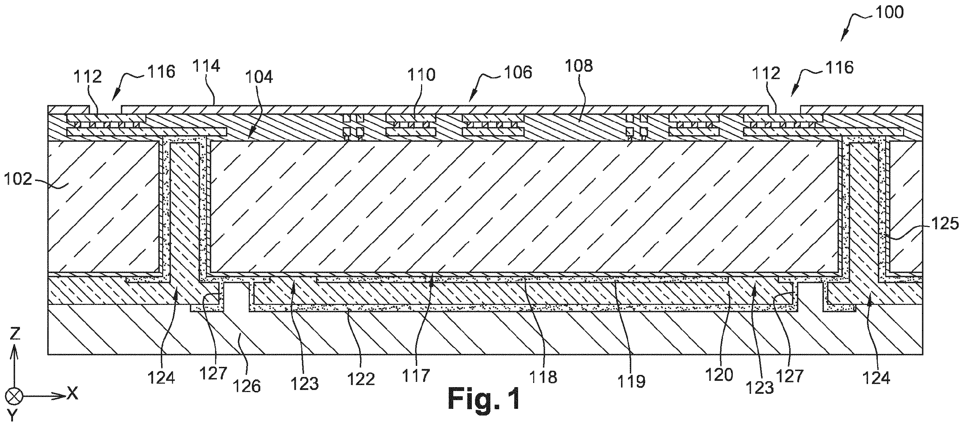

On se réfère tout d'abord à la figure 1 qui représente une vue en coupe d'une puce électronique 100 selon un premier mode de réalisation.

La puce électronique 100 comporte un substrat 102, comportant par exemple un matériau semi-conducteur tel que du silicium, dont l'épaisseur est généralement égale à environ 180 µm dans le cas d'une puce électronique 100 d'une carte à puce. Le substrat 102 comporte une face avant 104 sur laquelle est réalisé un circuit électronique 106. Le circuit électronique 106 est formé dans une couche diélectrique 108 comportant par exemple du SiO₂, et comprend notamment une partie active 110 comprenant des composants électroniques et destinée à être protégée d'éventuelles attaques de la puce électronique 100. Le circuit électronique 106 comporte également des parties périphériques correspondant ici à des plots de contact 112 accessibles depuis la face avant de la puce électronique 100. La face avant de la puce électronique 100 est formée par une couche de passivation 114, correspondant par exemple à un bicouche d'oxyde et de nitrure tel que du SiO₂ et du SiN, à travers laquelle sont formées des ouvertures 116 pour accéder aux plots de contact 112. Une face arrière 117 du substrat 102 est recouverte par une couche diélectrique 118 qui comprend par exemple un oxyde de semi-conducteur tel que du SiO₂, et/ou du SiN, par exemple déposé par PECVD (dépôt chimique en phase vapeur assisté par plasma) et d'épaisseur comprise entre environ 1 µm et 5 µm.

La puce électronique 100 comporte également des moyens de protection de sa face arrière. Ces moyens de protection comportent ici :
- une couche électriquement conductrice 119 disposée sur la couche diélectrique 118, en regard au moins de la partie active 110 du circuit électronique 106 ;
- une première couche de protection 120 recouvrant notamment la couche continue électriquement conductrice 119 ;
- un élément résistif 122 disposé sur la première couche de protection 120 et qui est relié électriquement au circuit électronique 106 par l'intermédiaire de premiers vias conducteurs 124 qui traversent toute l'épaisseur du substrat 102 ;
- une deuxième couche de protection 126 recouvrant notamment l'élément résistif 122 et formant la face arrière de la puce électronique 100.

Les parois latérales de chaque premier via conducteur 124 sont recouvertes par des parties de la couche diélectrique 118. Une couche électriquement conductrice 125 recouvre ces parties de la couche diélectrique 118 (qui forme ainsi une isolation entre cette couche électriquement conductrice 125 et le substrat 102) ainsi que la paroi de fond de chaque premier via conducteur 124 afin de former une liaison électrique entre les faces avant et arrière 104, 117 du substrat 102. Les couches électriquement conductrices 119 et 125 sont issues d'une même couche de matériau électriquement conducteur qui correspond par exemple à du cuivre déposé par ECD (dépôt électrochimique) avec une épaisseur comprise entre environ 1 µm et 5 µm, et/ou du tungstène pouvant être déposé par PVD (dépôt physique en phase vapeur) avec une épaisseur comprise entre environ 100 nm et 800 nm, et/ou du titane. La couche électriquement conductrice 125 a une épaisseur sensiblement constante et ne remplit donc pas complètement le volume des premiers vias conducteurs 124. Le reste du volume des premiers vias conducteurs 124 est ici rempli par le matériau diélectrique de la première couche de protection 120. Les couches électriquement conductrices 119 et 125 sont isolées électriquement l'une de l'autre en gravant des parties de la couche déposée dont sont issues les couches 119 et 125 (voir les régions d'isolation 123 visibles sur la figure 1 et formées en gravant la couche dont sont issues les couches 119 et 125).

Les diamètres des premiers vias 124 sont par exemple de l'ordre de 80 µm.

L'élément résistif 122 est par exemple formé par un dépôt ECD ou PVD de cuivre ou d'aluminium et d'épaisseur comprise entre environ 1 µm et 20 µm, et avantageusement comprise entre environ 1 µm et 10 µm. L'élément résistif 122 est relié électriquement aux couches électriquement conductrices 125 des premiers vias conducteurs 124 par des portions conductrices 127, comprenant par exemple du cuivre ou de l'aluminium, qui traversent la première couche de protection 120.

L'épaisseur (dimension selon l'axe Z) de l'empilement comprenant le substrat 102, le circuit électronique 106 et la couche de passivation 114 est par exemple inférieure ou égale à environ 200 µm.

Les couches de protection 120 et 126 comportent un matériau diélectrique, et correspondent à des couches de polymère. Les épaisseurs des couches de protection 120 et 126 sont par exemple comprises entre environ 3 µm et 50 µm. Avantageusement, le polymère est choisi parmi les matériaux possédant un module d'Young rendant difficile l'amincissement mécanique et/ou le polissage de la puce électronique 100 depuis sa face arrière, par exemple compris entre environ 1 et 10 GPa. Un tel matériau est avantageusement utilisé au moins pour la deuxième couche de protection 126. Les matériaux des couches de protection 120, 126 peuvent avoir un coefficient de dilatation thermique compris entre environ 10 et 100, et peuvent avoir une température de transition vitreuse comprise entre environ 100°C et 200°C.

De plus, les matériaux des couches de protection 120, 126 sont des matériaux diélectriques, ce qui permet de contrer les attaques de la puce électronique 100 par faisceau FIB de part le phénomène d'accumulation de charges se produisant dans un tel matériau diélectrique, ce qui entraine un décalage du faisceau d'ions et empêche la gravure de ces couches de protection 120, 126.

Les matériaux des couches de protection 120, 126 sont également choisis en fonction de la nature du matériau du substrat 102, tel que qu'un agent de gravure typiquement utilisé pour graver chimiquement le substrat 102 grave également les matériaux des couches de protection 120, 126. Ces matériaux sont choisis tels que celui de la première couche de protection 120 ait une résistance à la gravure chimique qui soit inférieure ou égale à celle du matériau de la deuxième couche de protection 126. Ainsi, lors d'une telle gravure chimique, la première couche de protection 120 est nécessairement gravée même si la deuxième couche de protection 126 ne l'est pas totalement. La première couche de protection 120 est gravée plus rapidement que la deuxième couche de protection 126 (ou à la même vitesse lorsque les deux couches de protection 120, 126 sont de même nature), ce qui implique qu'une détection de l'intrusion ou de l'attaque se produit (via la destruction de l'élément résistif 122 qui n'est plus supporté mécaniquement) avant que l'élément résistif 122 ne puisse être atteint grâce à la gravure de la deuxième couche de protection 126.

De manière avantageuse, des particules, appelées « fillers », qui sont typiquement en silice ou en alumine, sont dispersées dans les matériaux diélectriques des couches de protection 120, 126. De telles particules gênent une gravure des couches de protection 120, 126 par faisceau FIB. De plus, de telles particules perturbent également un faisceau laser qui serait utilisé dans le cas d'attaques laser de la puce électronique 100. Ces particules peuvent être avantageusement recouvertes de métal, par exemple du tungstène et/ou du titane, pour mieux perturber une attaque par faisceau laser de la puce électronique 100. Les diamètres de ces particules peuvent être compris entre environ 1 µm et 15 µm. Le pourcentage de particules dans les couches de protection 120, 126 peut être compris entre 0 % (absence de ces particules) et environ 90 %.

Les matériaux diélectriques des couches de protection 120, 126 sont avantageusement choisis tels qu'ils soient opaques à tous les signaux lumineux de longueur d'onde infrarouge et proche infrarouge, c'est-à-dire de longueur d'onde comprise entre environ 700 nm et 1 mm. Ainsi, il est impossible à celui réalisant une attaque par faisceau laser infrarouge de visualiser le circuit électronique 106 à travers le silicium du substrat 102 et les couches de protection 120, 126 pour viser la partie active 110 du circuit électronique 106 pertinente pour l'attaque.

De manière avantageuse, les couches de protection 120, 126 sont réalisées à partir de matériaux diélectriques différents ayant chacun des propriétés complémentaires. Par exemple, la première couche de protection 120 peut être réalisée avec un premier polymère qui est opaque vis-à-vis des faisceaux laser infrarouge, et la deuxième couche de protection 126 peut être réalisée avec un deuxième polymère ayant une dureté supérieure à celle du premier polymère et qui est chargé de « fillers ». Ce premier polymère peut être à base de silicone, par exemple du polymère DF5770 distribué par la société Shin-Etsu, et le deuxième polymère peut être à base de résine époxy, par exemple du polymère A2023 distribué par la société Nagase.

En variante ne faisant pas partie de l'invention, la deuxième couche de protection 126 peut recouvrir les côtés, c'est-à-dire les faces latérales, de la puce électronique 100.

De manière générales, les matériaux diélectriques des couches de protection 120, 126 peuvent être choisis tels qu'ils présentent une ou plusieurs des propriétés suivantes :
- polymère à base de silicone ou de résine époxy ;
- aspect de préférence noir, ou bien blanc ou gris ;
- de préférence photosensible, notamment pour la première couche de protection 120 ;
- module d'Young compris entre environ 1 GPa à 10 GPa.

Lors du fonctionnement de la puce électronique 100, le circuit électronique 106 mesure au préalable la valeur de la résistance électrique de l'élément résistif 122. Si la valeur de cette résistance électrique n'est pas conforme à la valeur attendue, les données sont alors bloquées et la puce électronique 100 se verrouille (mise en défaut). Ainsi, toute attaque de la puce électronique 100 depuis sa face arrière qui entraine une rupture ou une modification de la valeur de la résistance de l'élément résistif 122 est détectée par la puce électronique 100, et la puce électronique 100 se bloque de façon à détruire sa fonctionnalité.

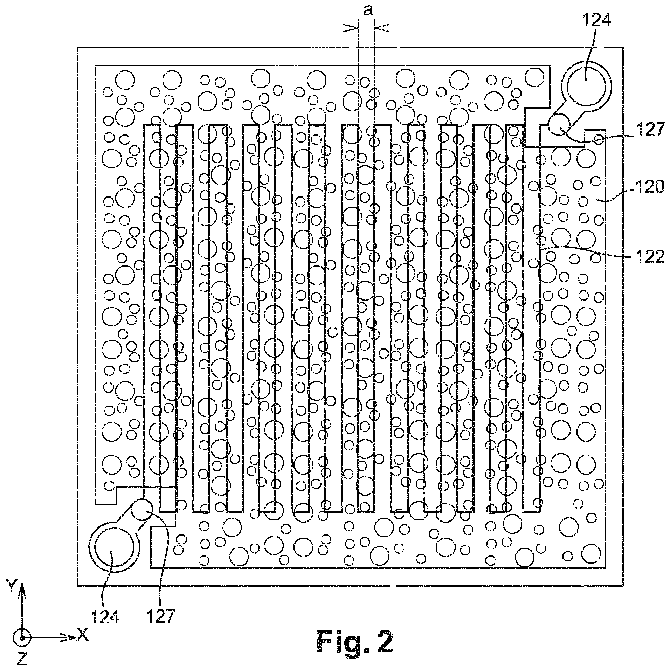

La figure 2 représente une vue de dessus de l'élément résistif 122. Dans le plan principal de la puce électronique 100 correspondant au plan (X,Y) sur les figures 1 et 2, l'élément résistif 122 correspond à une piste conductrice s'étendant entre les deux premiers vias conducteurs 124 en ayant un motif de serpentin, ce qui permet de bien couvrir la surface se trouvant en regard au moins de la partie active 110 du circuit électronique 106. Sur l'exemple de la figure 2, le motif de l'élément résistif 122 couvre quasiment l'ensemble de la surface de la face arrière de la puce électronique 100.

Avantageusement, la largeur de la piste conductrice formant l'élément résistif 122 et l'espace entre deux portions parallèles de la piste conductrice (distance référencée « a » sur la figure 2) sont compris entre environ 5 µm et 50 µm. Ainsi, une attaque par FIB, typiquement réalisée sur une surface de la puce électronique 100 correspondant à un carré de dimensions égales à 50 µm × 50 µm, engendre nécessairement une modification importante de la résistance électrique de l'élément résistif 122. De plus, un espace d'au moins 5 µm entre les différentes portions de la piste conductrice permet de bien laisser passer un agent de gravure entre ces portions lors d'une éventuelle attaque chimique de la face arrière de la puce électronique 100, entrainant dans ce cas la destruction de la première couche de protection 120 et donc également la destruction de l'élément résistif 122 qui n'est plus supporté mécaniquement par celle-ci.

Le motif formé par l'élément résistif 122 au niveau de la face arrière de la puce électronique 100 est avantageusement choisi tel qu'il soit suffisamment dense et complexe pour qu'un « détour de fil », c'est-à-dire la réalisation d'un pont métallique ou d'un court-circuit entre deux parties de l'élément résistif 122, ou encore le positionnement d'une résistance équivalente entre les deux premiers vias conducteurs 124, induise une variation significative de la résistance de l'élément résistif 122 qui peut être détectée.

Par exemple, dans le cas d'un élément résistif 122 correspondant à un serpentin formé par une piste conductrice en cuivre de largeur égale à 25 µm, d'épaisseur égale à 10 µm, avec des espaces entres les portions voisines de la piste conductrice (dimension « a ») égaux à 25 µm et recouvrant une surface de la puce égale à 2 mm², la résistance électrique de cet élément résistif 122 est égale à environ 7 Ω. En cas d'arrachement ou de coupure de l'élément résistif 122 par un faisceau FIB, la valeur de sa résistance électrique devient infinie. La sensibilité d'un tel élément résistif 122 vis-à-vis d'une attaque mécanique ou chimique, ou par faisceau FIB, est donc bien meilleure que pour d'autres solutions de protection de la face arrière de la puce de l'art antérieur.

En variante ne faisant pas partie de l'invention, le motif formé par l'élément résistif 122 peut être différent d'un serpentin, et peut correspondre à plusieurs motifs alternés, entremêlés, enroulés ou entrelacés afin de rendre cette opération de « détour de fil » très compliquée.

Le matériau diélectrique de la première couche de protection 120 est avantageusement photosensible afin de pouvoir être insolé puis développé aisément pour former les emplacements des portions conductrices 127. Ce matériau diélectrique est par exemple un polymère laminé sous vide, ce qui permet de bien remplir l'espace des premiers vias conducteurs 124 non occupé par la couche diélectrique 118 et la couche électriquement conductrice 125.

La combinaison de l'élément résistif 122 et des couches de protection 120, 126 permet d'optimiser les deux modes de protection conférés par ces deux éléments. En effet, une attaque chimique ou mécanique qui est la principale limite de la protection conférée par une couche de protection seule en polymère, est systématiquement détectée grâce à l'endommagement engendré sur l'élément résistif 122. Dans le cas d'une attaque mécanique de la face arrière de la puce électronique 100, celle-ci arrachera une partie de l'élément résistif 122 et créera un circuit ouvert entre les premiers vias conducteurs 124 qui sera détecté par la puce électronique 100. Dans le cas d'une attaque chimique de la face arrière de la puce électronique 100, celle-ci retirera le matériau des couches de protection 120, 126 entourant l'élément résistif 122 et provoquera une rupture de l'élément résistif 122 qui de même sera détectée par la puce électronique 100. Enfin, une attaque par FIB classique sera impossible sur les matériaux des couches de protection 120, 126 car ils présentent une résistance importante à la gravure par FIB grâce à leur caractère diélectrique. De plus, l'alignement du FIB est impossible dans le cas de matériaux diélectriques opaques. L'utilisation d'un FIB haute énergie pourrait permettre avec difficulté une gravure à l'aveugle mais après avoir traversé le matériau de la deuxième couche de protection 126, le FIB endommagera obligatoirement l'élément résistif 122 et cette attaque sera également détectée.

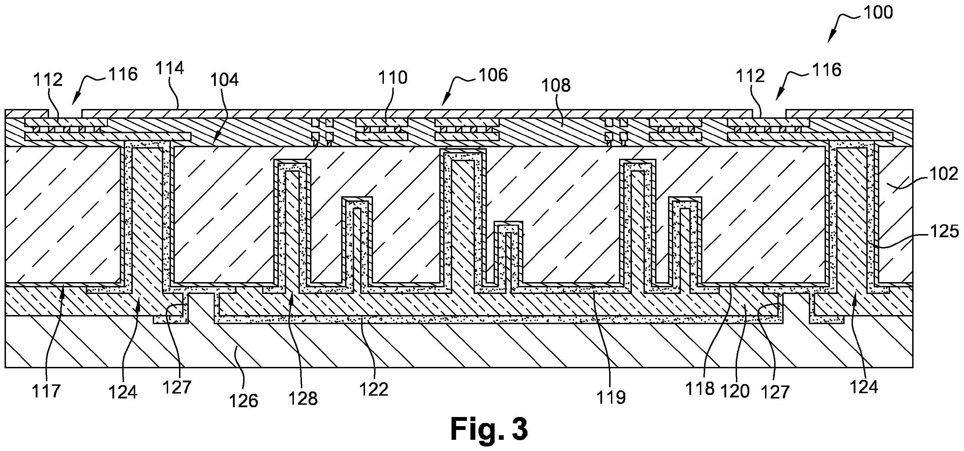

La figure 3 représente une vue en coupe d'une puce électronique 100 selon un deuxième mode de réalisation.

Dans ce deuxième mode de réalisation, outre les premiers vias conducteurs 124 qui relient électriquement l'élément résistif 122 au circuit électronique 106, la puce électronique 100 comporte également plusieurs deuxièmes vias 128 non débouchant réalisés depuis la face arrière 117 du substrat 102 et à travers une partie de l'épaisseur du substrat 102, en regard du circuit électronique 106 et notamment de la partie active 110.

Les deuxièmes vias 128 comportent des profondeurs (dimensions selon l'axe Z) et des dimensions dans un plan parallèle aux faces principales 104 et 117 du substrat 102 (plan (X,Y)), correspondant aux diamètres dans le cas de deuxièmes vias 128 de sections sensiblement circulaires, avantageusement différentes les unes par rapport aux autres, et par exemple choisies de manière aléatoire lors de leur réalisation. Les profondeurs des deuxièmes vias 128 sont liées aux diamètres des deuxièmes vias 128, et sont choisies notamment en fonction de l'épaisseur du substrat 102. Les deuxièmes vias 128 ont avantageusement des diamètres inférieurs à environ 80 µm et des profondeurs inférieures à environ 200 µm. En outre, du fait que, contrairement aux premiers vias conducteurs 124, les deuxièmes vias 128 ne traversent qu'une partie de l'épaisseur du substrat 102, les diamètres des deuxièmes vias 128 sont inférieurs à ceux des premiers vias conducteurs 124.

Les parois latérales et les parois de fond des deuxièmes vias 128 sont recouvertes par la couche diélectrique 118. La couche électriquement conductrice 119 recouvre ici de manière continue la couche diélectrique 118 au niveau des parois latérales et des parois de fond des vias 128, ainsi qu'au niveau d'une partie de la face arrière 117 du substrat 102, notamment entre les deuxièmes vias 128.

La présence des deuxièmes vias 128 au niveau de la face arrière de la puce électronique 100 forme une structure d'affaiblissement mécanique du substrat 102 permettant de protéger la puce électronique 100 vis-à-vis des attaques chimiques et/ou d'attaques par gravure FIB. En effet, les parois de fond du ou des deuxièmes vias 128 sont avantageusement proches du circuit électronique 106, par exemple telles que la distance séparant le circuit électronique 106 de la ou des parois de fond soit inférieure ou égale à environ 20 µm, ou par exemple comprise entre environ 10 et 20 µm. Ainsi, une attaque chimique, par exemple avec une solution d'acide fluorhydrique et d'acide nitrique ou d'hydroxyde de potassium, dans le but de graver le substrat 102 depuis sa face arrière 117 aura pour conséquence une destruction prématurée du circuit électronique 106 par la face arrière en raison de la ou des solutions chimiques qui attaqueront les parois de fond des deuxièmes vias 128 et atteindront rapidement le circuit électronique 106. Les deuxièmes vias 128 forment donc une protection supplémentaire par rapport à ce type d'attaque. De plus, en cas d'attaque par gravure FIB, la présence des deuxièmes vias 128 est pénalisante, ce qui forme également une protection supplémentaire par rapport à ce type d'attaque.

En variante, le ou les deuxièmes vias 128 peuvent correspondre à une ou plusieurs tranchées formées dans une partie de l'épaisseur du substrat 102.

Selon une variante des deux modes de réalisation précédemment décrits, le motif de l'élément résistif 122 dans un plan parallèle à la face arrière 117 du substrat 102 peut correspondre à celui d'une bobine. La puce électronique 100 comporte alors également un élément inductif tel qu'une deuxième bobine disposée au niveau de la face avant de la puce électronique 100, par exemple intégrée au circuit électronique 106, cette deuxième bobine étant couplée de manière inductive avec celle formée par l'élément résistif 122. L'élément résistif 122 est réalisé tel qu'il fasse partie d'un circuit RLC couplé de manière inductive avec ledit élément inductif de la face avant. Ainsi, une modification d'une propriété électrique du circuit RLC engendrée par une attaque de la puce électronique au niveau de sa face arrière induit une modification d'une valeur d'une inductance de l'élément inductif intégré au circuit électronique 106 qui peut donc détecter cette attaque. Dans cette variante, il n'est pas nécessaire de réaliser les premiers vias 124 puisque la communication entre le circuit électronique 106 et l'élément résistif 122 se fait de manière inductive via l'élément inductif disposé au niveau de la face avant de la puce électronique 100. Pour former le circuit RLC, l'élément résistif 122 peut être réalisé sous la forme d'une bobine dont les extrémités sont reliées électriquement l'une à l'autre par exemple par la couche électriquement conductrice 119.

Selon une autre variante de réalisation, il est possible que la puce électronique 100 ne comporte pas la couche continue électriquement conductrice 119. Dans ce cas, les moyens de protection de la face arrière de la puce électronique 100 sont formés par les couches de protection 120, 126, par l'élément résistif 122, et éventuellement par les deuxièmes vias 128.

Dans tous les modes de réalisation et variantes précédemment décrits, il est possible que la puce électronique 100 comporte des moyens de protection de sa face avant, correspondant par exemple aux moyens de protection connus de l'art antérieur.

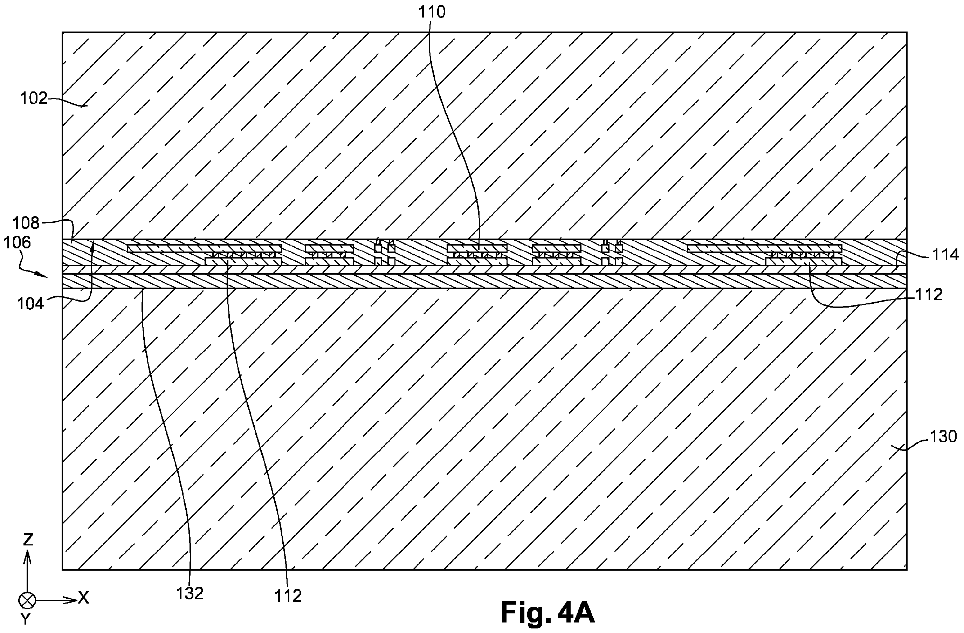

Les figures 4A à 4N représentent des étapes d'un procédé de réalisation de la puce électronique 100 précédemment décrite en liaison avec la figure 1.

Comme représenté sur la figure 4A, le circuit électronique 106 est réalisé au niveau de la face avant du substrat 102 via la mise en œuvre d'étapes classiques de la microélectronique. Le circuit électronique 106 est recouvert par la couche de passivation 114 qui forme la face avant de la puce électronique 100. Cette face avant est solidarisée à une poignée temporaire 130 formée par exemple par un substrat de silicium, ce collage étant par exemple réalisé entre la couche de passivation 114 à base d'oxyde et une autre couche d'oxyde 132 formée au préalable sur la poignée temporaire 130.

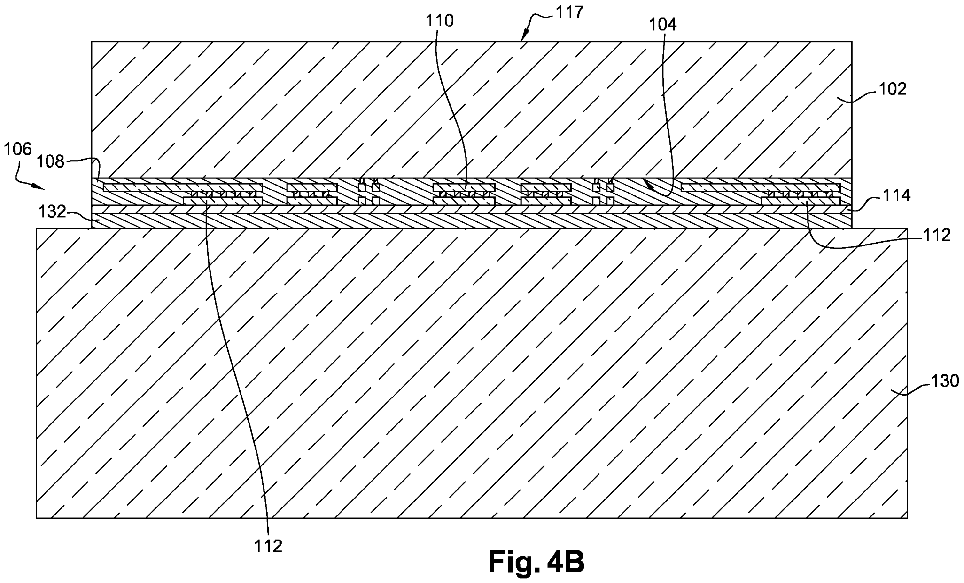

Le substrat 102 est ensuite aminci depuis sa face arrière jusqu'à ce que l'ensemble formé du substrat 102 et du circuit électronique 106 ait une épaisseur inférieure ou égale à environ 200 µm (figure 4B).

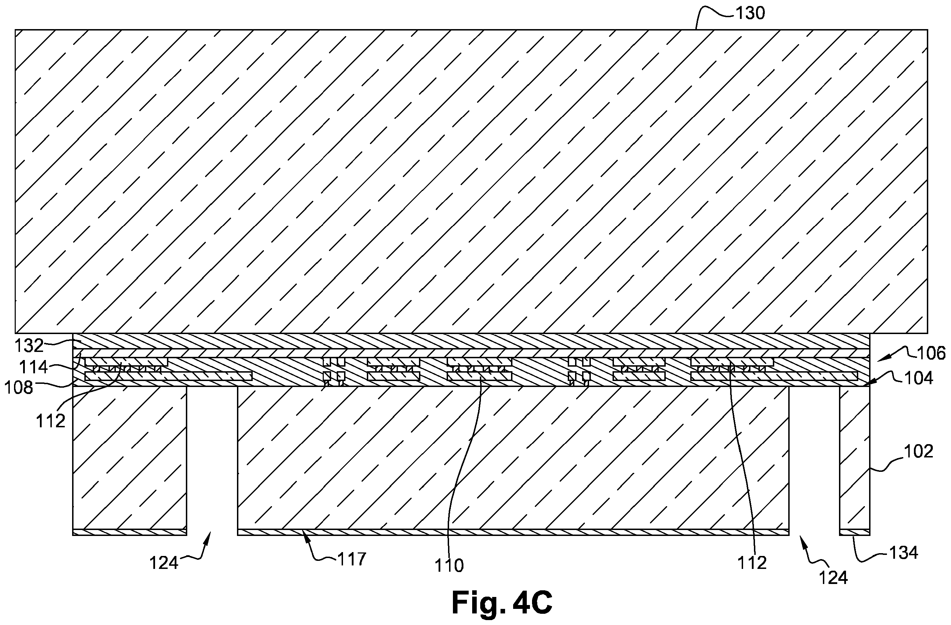

Un masque dur 134, comportant par exemple un oxyde, est ensuite réalisé sur la face arrière du substrat 102. Les premiers vias 124 sont ensuite formés à travers le masque dur 134 et le substrat 102 par lithographie, gravure du matériau du masque dur 134 et gravure profonde du matériau du substrat 102 (figure 4C). Lorsque la puce électronique 100 comporte les deuxièmes vias 128 comme sur l'exemple de la figure 3, les deuxièmes vias 128 et les premiers vias 124 peuvent être réalisés simultanément via la mise en œuvre d'étapes communes de lithographie et de gravure. Des ouvertures dont les dimensions et le positionnement correspondent à celles souhaitées pour les deuxièmes vias 128 sont donc formées à travers le masque dur 134.

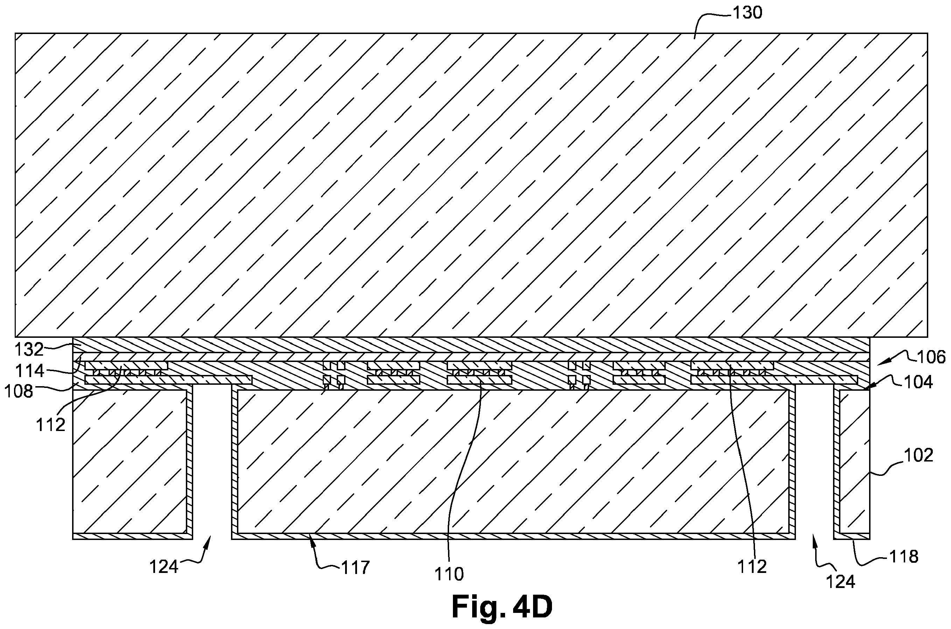

Comme représenté sur la figure 4D, la couche diélectrique 118 est ensuite déposée, par exemple par PECVD ou SACVD (dépôt chimique en phase vapeur à pression sub-atmosphérique), telle qu'elle recouvre le masque dur 134 disposé sur la face arrière du substrat 102, ainsi que les parois latérales et les parois de fond des premiers vias 124 (et éventuellement des deuxièmes vias 128). Les parties de la couche diélectrique 118 déposées sur les parois de fond des premiers vias 124 sont ensuite supprimées afin que des contacts électriques puissent être ultérieurement réalisés par l'intermédiaire de ces premiers vias 124.

Les couches électriquement conductrices 119 et 125 sont ensuite réalisées par exemple par la mise en œuvre des étapes suivantes :
- dépôt d'une couche barrière à la diffusion, comportant par exemple un bicouche Ti/TiN (Ti déposé par exemple par PVD et TiN déposé par exemple par MOCVD, ou dépôt chimique en phase vapeur organométallique), sur la couche diélectrique 118 ainsi qu'au niveau des parois de fond des premiers vias 124 (et éventuellement également sur les parois latérales et les parois de fond des deuxièmes vias 128) ;
- dépôt d'une couche de croissance, comportant par exemple du cuivre, sur la couche barrière ;
- lithographie d'un film sec (de type résine positive ou négative) de sorte à définir des régions d'isolation électrique entre les couches 119 et 125) et croissance électrolytique, par exemple de cuivre, à partir de la couche de croissance ;
- retrait du film sec, puis gravure des parties de la couche de croissance et de la couche barrière au niveau des régions d'isolation 123 entre les couches 119 et 125.

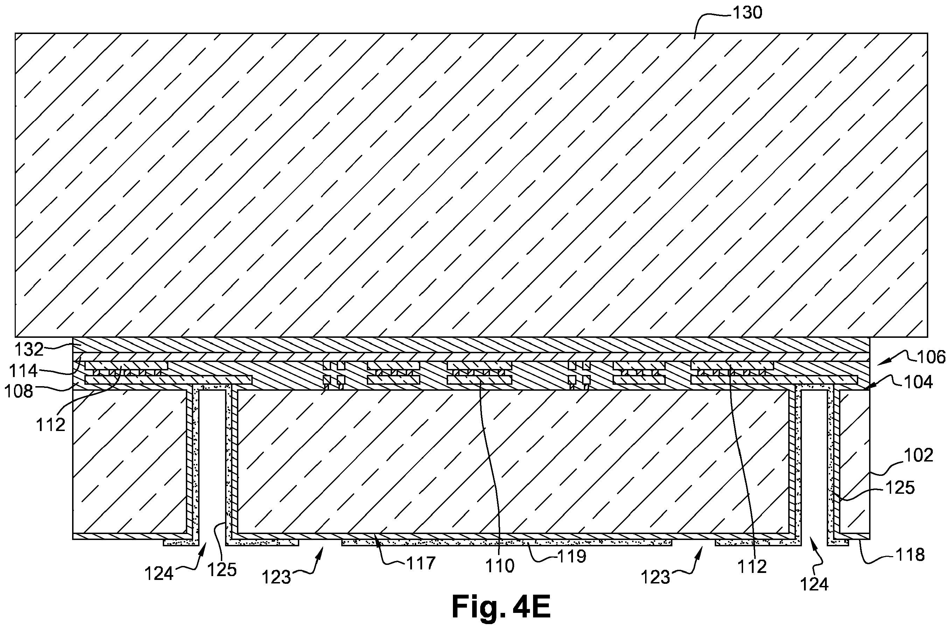

La structure obtenue à ce stade du procédé est représentée sur la figure 4E.

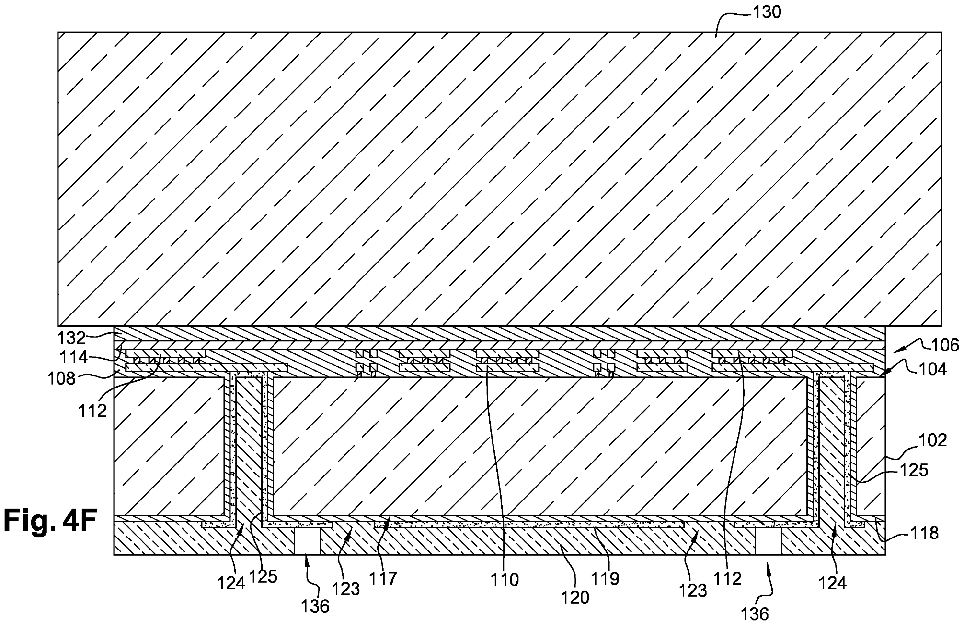

La première couche de protection 120 est ensuite déposée, par exemple par un laminage sous vide, sur l'ensemble de la face arrière de la structure précédemment obtenue, c'est-à-dire sur les couches électriquement conductrices 119 et 125, ainsi qu'au niveau des régions d'isolation 123 entre les couches 119 et 125. Le matériau de la première couche de protection 120 est déposé tel qu'il remplisse les premiers vias 124 (et éventuellement les deuxièmes vias 128). Ensuite, la première couche de protection 120 est gravée (ou photo-définie si cette couche est à base de matériau photosensible) afin de former des ouvertures 136 débouchant sur la couche conductrice 125 au niveau de chacun des premiers vias 124, ces ouvertures 136 formant les emplacements des portions conductrices 127 destinées à être réalisées ultérieurement (figure 4F).

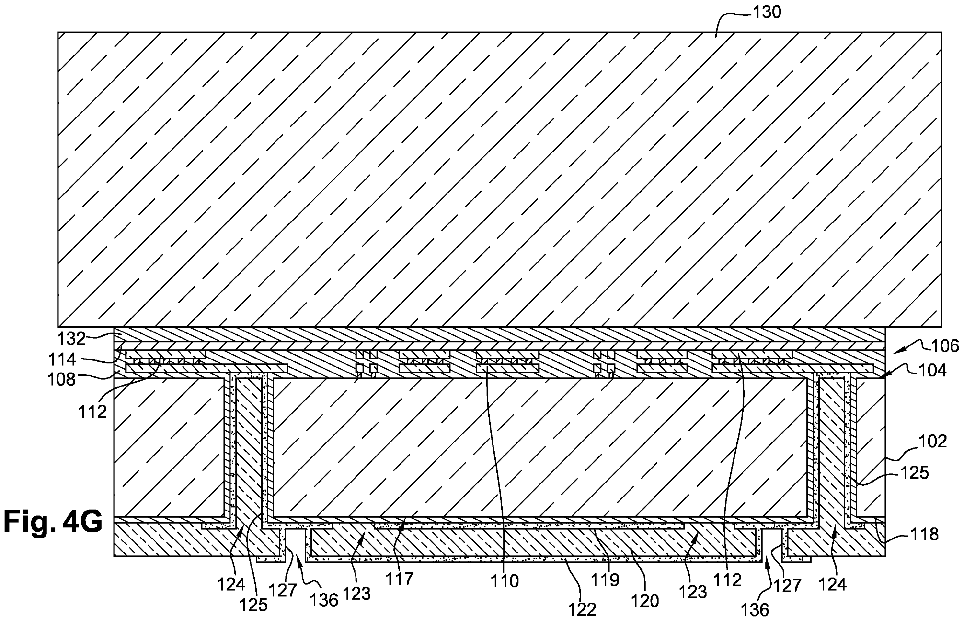

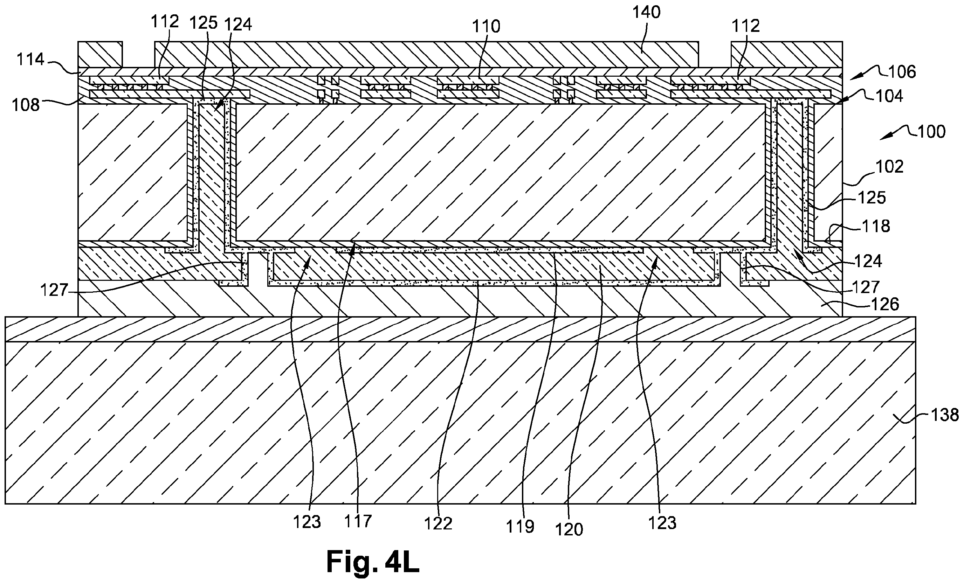

Comme représenté sur la figure 4G, l'élément résistif 122 ainsi que les portions conductrices 127 sont ensuite réalisés par exemple par la mise en œuvre des étapes suivantes :
- dépôt d'une couche barrière à la diffusion, comportant par exemple un bicouche Ti/TiN, sur la première couche de protection 120 et dans les ouvertures 136 ;
- dépôt d'une couche de croissance, comportant par exemple du cuivre, sur la couche barrière ;
- lithographie d'un film sec dont le motif (c'est-à-dire les endroits où la résine est retirée) correspond aux régions occupées par l'élément résistif 122 et les portions conductrices 127) et croissance électrolytique, par exemple de cuivre, à partir de la couche de croissance ;
- retrait du film sec, puis gravure des parties de la couche de croissance et de la couche barrière au niveau des régions non occupées par l'élément résistif 122 et les portions conductrices 127.

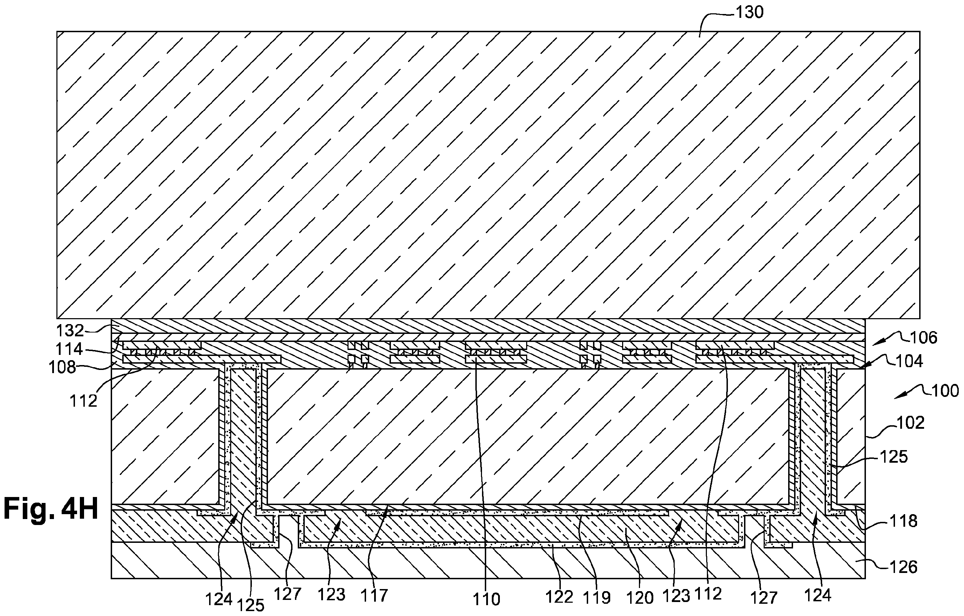

La deuxième couche de protection 126 est ensuite déposée, par exemple via la mise en œuvre d'un dépôt à la tournette ou par laminage, encapsulant ainsi l'élément résistif 122 entre les deux couches de protection 120, 126 (figure 4H) La deuxième couche de protection 126 recouvre également les portions conductrices 127 ainsi que certaines parties de la première couche de protection 120.

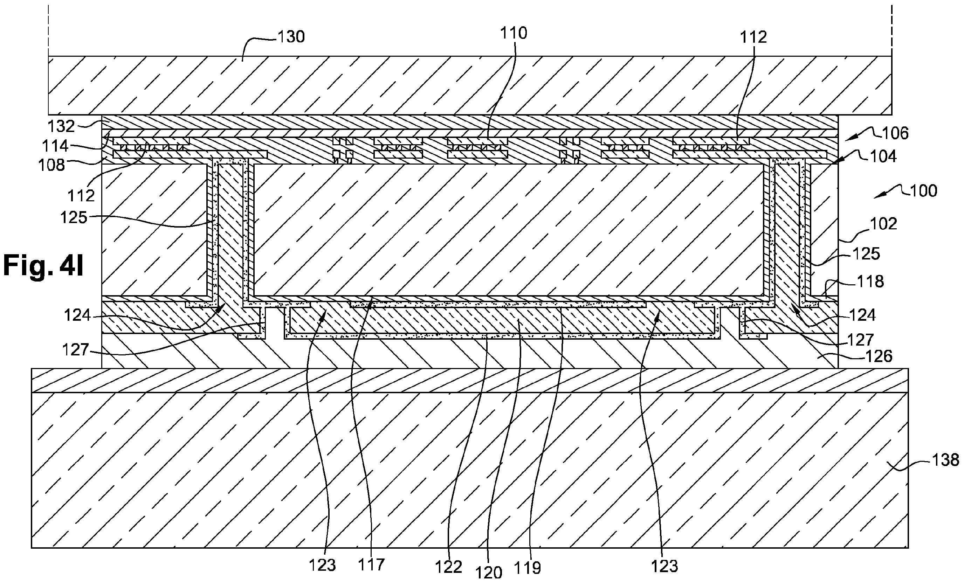

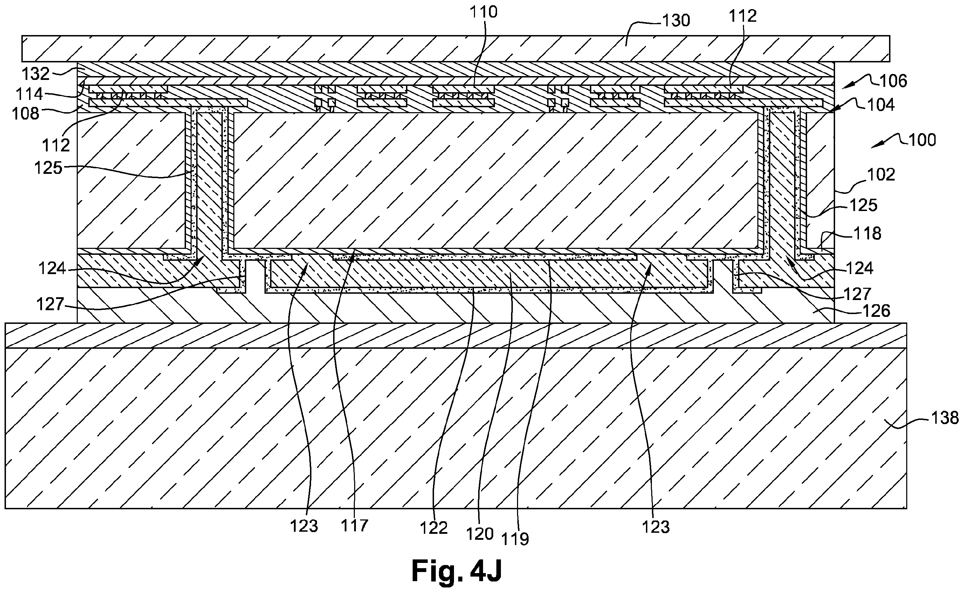

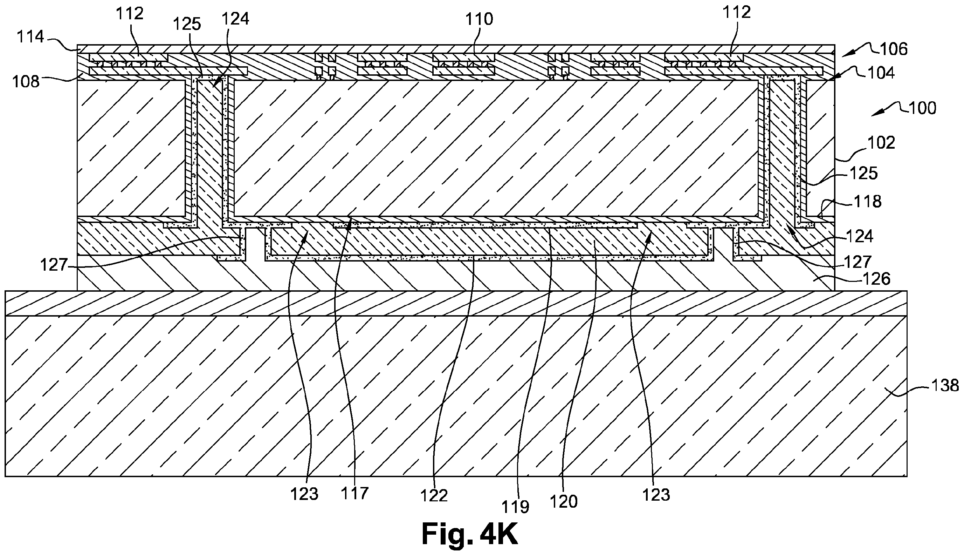

La poignée temporaire 130 est ensuite retirée. Pour cela, les étapes ci-dessous sont par exemple mises en œuvre :
- un support temporaire 138 comportant par exemple un polymère est solidarisé à la deuxième couche de protection 126 de la puce 100 (figure 4I) ;
- la poignée temporaire 130 est ensuite amincie, par exemple par meulage (figure 4J), puis est complètement retirée (figure 4K).

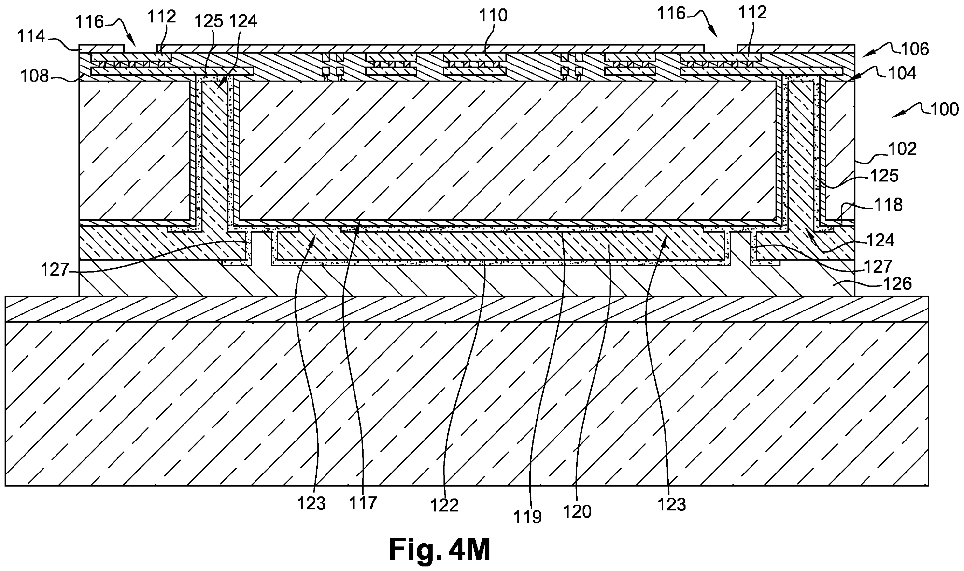

Les ouvertures 116 sont ensuite réalisées à travers la couche de passivation 114, par exemple par dépôt d'un masque de lithographie 140 (figure 4L) et gravure (figure 4M), afin de former des accès aux plots de contact 112.

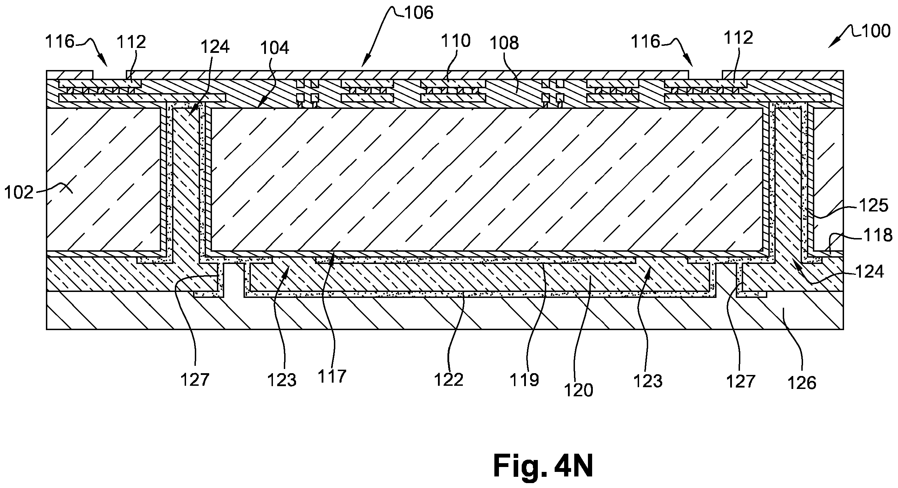

Enfin, le support temporaire 138 est retiré (figure 4N).

## Revendications

1. Puce électronique (100) comportant au moins :
- un circuit électronique (106) disposé au niveau d'une face avant (104) d'un substrat (102) ;
- une première couche de protection (120) disposée sur une face arrière (117) du substrat (102) ;
- un élément résistif (122) disposé sur la première couche de protection (120) et en regard d'au moins une partie (110) du circuit électronique (106), supporté mécaniquement par la première couche de protection (120) et relié électriquement et/ou de manière inductive au circuit électronique (106) tel qu'une modification de la valeur de la résistance électrique de l'élément résistif (122) puisse être détectée par le circuit électronique (106) ;
- une deuxième couche de protection (126) recouvrant au moins l'élément résistif (122) et la première couche de protection (120) et telle que les parois latérales des première et deuxième couches de protection soient accessibles pour être gravées lors d'une gravure chimique ;
et dans laquelle :
- la première couche de protection (120) comporte au moins un matériau diélectrique ayant une résistance à une gravure chimique par au moins un agent de gravure chimique inférieure ou égale à celle d'un matériau diélectrique de la deuxième couche de protection (126),
- les matériaux diélectriques des première et deuxième couches de protection (120, 126) sont des polymères,
- l'agent de gravure chimique correspond à une solution à base de KOH et/ou de TMAH et/ou d'acide fluorhydrique et/ou d'acide nitrique,
- l'élément résistif (122) comporte au moins une piste conductrice ayant au moins un motif de serpentin, et
- la résistance à une gravure chimique par ledit au moins un agent de gravure chimique et l'épaisseur de chacune des première et deuxième couches de protection (120, 126) sont telles que la première couche de protection (120) est détruite par gravure avant la deuxième couche de protection (126).

2. Puce électronique (100) selon la revendication 1, dans laquelle au moins le matériau diélectrique de la deuxième couche de protection (126) est résistant à un polissage mécanique et comporte un module d'Young supérieur ou égal à environ 1 GPa, et/ou est opaque vis-à-vis d'un rayonnement infrarouge et comporte un coefficient de transmission d'un rayonnement infrarouge inférieur à environ 20 % vis-à-vis du rayonnement infrarouge, et/ou est résistant à une attaque par sonde ionique focalisée tel qu'une vitesse d'abrasion par sonde ionique focalisée soit inférieure à environ 0,5 µm/min pour une fenêtre d'attaque de dimensions 50 × 50 µm².

3. Puce électronique (100) selon l'une des revendications précédentes, dans laquelle le matériau diélectrique de la première couche de protection (120) et/ou le matériau diélectrique de la deuxième couche de protection (126) est un polymère comportant de l'époxy et/ou du silicone.

4. Puce électronique (100) selon l'une des revendications précédentes, dans laquelle la première couche de protection (120) et/ou la deuxième couche de protection (126) comporte en outre des particules d'un premier matériau différent du matériau diélectrique de la première couche de protection (120) et/ou du matériau diélectrique de la deuxième couche de protection (126), et qui sont réparties dans l'ensemble du matériau diélectrique de la première couche de protection (120) et/ou du matériau diélectrique de la deuxième couche de protection (126).

5. Puce électronique (100) selon la revendication 4, dans laquelle le premier matériau des particules comporte de la silice et/ou de l'alumine.

6. Puce électronique (100) selon l'une des revendications 4 ou 5, dans laquelle le premier matériau des particules est recouvert d'un deuxième matériau réfléchissant vis-à-vis d'un rayonnement lumineux et/ou électronique et/ou ionique.

7. Puce électronique (100) selon l'une des revendications précédentes, dans laquelle la piste conductrice a une largeur comprise entre environ 5 µm et 50 µm, et/ou dans laquelle des portions de la piste conductrice qui sont voisines et parallèles l'une par rapport à l'autre sont espacées l'une de l'autre d'une distance comprise entre environ 5 µm et 50 µm.

8. Puce électronique (100) selon l'une des revendications précédentes, comportant en outre une couche électriquement conductrice (119) disposée entre la face arrière (117) du substrat (102) et la première couche de protection (120).

9. Puce électronique (100) selon l'une des revendications précédentes, comportant en outre au moins deux premiers vias conducteurs (124) traversant le substrat (102) et reliant électriquement l'élément résistif (122) au circuit électronique (106).

10. Puce électronique (100) selon l'une des revendications 1 à 8, comportant en outre un élément inductif disposé au niveau de la face avant (104) du substrat (102) et relié électriquement au circuit électronique (106), et dans laquelle l'élément résistif (122) fait partie d'un circuit RLC apte à être couplé de manière inductive avec ledit élément inductif tel qu'une modification d'une valeur d'une inductance de l'élément inductif induise une modification d'une propriété électrique du circuit RLC.

11. Puce électronique (100) selon la revendication 10, dans laquelle l'élément inductif est intégré au circuit électronique (106).

12. Puce électronique (100) selon l'une des revendications 10 ou 11, dans laquelle le motif de l'élément résistif (122), dans un plan parallèle à la face arrière (117) du substrat (102), correspond à celui d'une bobine.

13. Puce électronique (100) selon l'une des revendications précédentes, comportant en outre au moins un deuxième via (128) et/ou une tranchée traversant la face arrière (117) du substrat (102) et une partie de l'épaisseur du substrat (102), et disposé au moins en regard du circuit électronique (106) tel qu'une paroi de fond du deuxième via (128) et/ou de la tranchée soit espacée du circuit électronique (106) d'une distance non nulle.

14. Procédé de réalisation d'une puce électronique (100) comportant au moins les étapes de :
- réalisation d'un circuit électronique (106) au niveau d'une face avant (104) d'un substrat (102) ;
- réalisation d'une première couche de protection (120) sur une face arrière (117) du substrat (102) ;
- réalisation d'au moins un élément résistif (122) sur la première couche de protection (120) et en regard d'au moins une partie (110) du circuit électronique (106), l'élément résistif (122) étant supporté mécaniquement par la première couche de protection (120) et relié électriquement et/ou de manière inductive au circuit électronique (106) tel qu'une modification de la valeur de la résistance électrique de l'élément résistif (122) puisse être détectée par le circuit électronique (106) ;
- réalisation d'une deuxième couche de protection (126) recouvrant au moins l'élément résistif (122) et la première couche de protection (120) et telle que les parois latérales des première et deuxième couches de protection soient accessibles pour être gravées lors d'une gravure chimique ;
et dans lequel :
- la première couche de protection (120) comporte au moins un matériau diélectrique ayant une résistance à une gravure chimique par au moins un agent de gravure chimique inférieure ou égale à celle d'un matériau diélectrique de la deuxième couche de protection (126),
- les matériaux diélectriques des première et deuxième couches de protection (120, 126) sont des polymères,
- l'agent de gravure chimique correspond à une solution à base de KOH et/ou de TMAH et/ou d'acide fluorhydrique et/ou d'acide nitrique,
- l'élément résistif (122) comporte au moins une piste conductrice ayant au moins un motif de serpentin, et
- la résistance à une gravure chimique par ledit au moins un agent de gravure chimique et l'épaisseur de chacune des première et deuxième couches de protection (120, 126) sont telles que la première couche de protection (120) est détruite par gravure avant la deuxième couche de protection (126).

## Patentansprüche

1. Elektronischer Chip (100), der mindestens Folgendes beinhaltet:
- eine elektronische Schaltung (106), die im Bereich einer Vorderseite (104) eines Substrats (102) angeordnet ist;
- eine erste Schutzschicht (120), die auf einer Rückseite (117) des Substrats (102) angeordnet ist;
- ein Widerstandselement (122), das auf der ersten Schutzschicht (120) und gegenüber mindestens einem Teil (110) der elektronischen Schaltung (106) angeordnet ist, das mechanisch durch die erste Schutzschicht (120) getragen wird, und elektrisch und/oder induktiv an die elektronische Schaltung (106) angeschlossen ist, sodass eine Änderung des Werts des elektrischen Widerstands des Widerstandselements (122) von der elektronischen Schaltung (106) erkannt werden kann;
- eine zweite Schutzschicht (126), die mindestens das Widerstandselement (122) und die erste Schutzschicht (120) abdeckt, und derart, dass die Seitenwände der ersten und zweiten Schutzschicht zugänglich sind, um bei einer chemischen Ätzung geätzt zu werden;
und wobei:
- die erste Schutzschicht (120) mindestens ein dielektrisches Material beinhaltet, das einen Widerstand gegenüber einer chemischen Ätzung durch mindestens ein chemisches Ätzmittel kleiner oder gleich jenem eines dielektrischen Materials der zweiten Schutzschicht (126) aufweist,
- die dielektrischen Materialien der ersten und zweiten Schutzschicht (120, 126) Polymere sind,
- das chemische Ätzmittel einer Lösung auf Grundlage von KOH und/oder TMAH und/oder einer Flusssäure und/oder einer Salpetersäure entspricht,
- das Widerstandselement (122) mindestens eine Leiterbahn beinhaltet, die mindestens ein Rohrschlangenmotiv aufweist, und
- der Widerstand gegenüber einer chemischen Ätzung durch das mindestens eine chemische Ätzmittel und die Dicke einer jeden der ersten und zweiten Schutzschicht (120, 126) derart sind, dass die erste Schutzschicht (120) durch Ätzen vor der zweiten Schutzschicht (126) zerstört wird.

2. Elektronischer Chip (100) nach Anspruch 1, wobei mindestens das dielektrische Material der zweiten Schutzschicht (126) einer mechanischen Politur widersteht, und ein Elastizitätsmodul größer oder gleich etwa 1 GPa beinhaltet, und/oder gegenüber Infrarotstrahlung opak ist, und einen Übertragungskoeffizienten einer Infrarotstrahlung kleiner als etwa 20 % gegenüber der Infrarotstrahlung beinhaltet, und/oder einem Angriff durch einen fokussierten Ionenstrahl widersteht, sodass eine Abriebgeschwindigkeit durch fokussierten Ionenstrahl geringer als etwa 0,5 µm/Min. bei einem Angriffsfenster mit den Abmessungen 50 × 50 µm² ist.

3. Elektronischer Chip (100) nach einem der vorstehenden Ansprüche, wobei das dielektrische Material der ersten Schutzschicht (120) und/oder das dielektrische Material der zweiten Schutzschicht (126) ein Polymer ist, das Epoxid und/oder Silikon beinhaltet.

4. Elektronischer Chip (100) nach einem der vorstehenden Ansprüche, wobei die erste Schutzschicht (120) und/oder die zweite Schutzschicht (126) weiter Teilchen aus einem ersten Material beinhaltet, das sich von dem dielektrischen Material der ersten Schutzschicht (120) und/oder von dem dielektrischen Material der zweiten Schutzschicht (126) unterscheidet, und die in der Gesamtheit des dielektrischen Materials der ersten Schutzschicht (120) und/oder des dielektrischen Materials der zweiten Schutzschicht (126) verteilt sind.

5. Elektronischer Chip (100) nach Anspruch 4, wobei das erste Material der Teilchen Siliziumdioxid und/oder Aluminiumoxid beinhaltet.

6. Elektronischer Chip (100) nach einem der Ansprüche 4 oder 5, wobei das erste Material der Teilchen von einem zweiten Material überdeckt ist, das gegenüber einer Licht- und/oder Elektronik- und/oder Ionenstrahlung reflektierend ist.

7. Elektronischer Chip (100) nach einem der vorstehenden Ansprüche, wobei die Leiterbahn eine Breite aufweist, die zwischen etwa 5 µm und 50 µm liegt, und/oder wobei Abschnitte der Leiterbahn, die benachbart und parallel zueinander sind, voneinander durch einen Abstand beabstandet sind, der zwischen etwa 5 µm und 50 µm liegt.

8. Elektronischer Chip (100) nach einem der vorstehenden Ansprüche, der weiter eine elektrisch leitfähige Schicht (119) beinhaltet, die zwischen der Rückseite (117) des Substrats (102) und der ersten Schutzschicht (120) angeordnet ist.

9. Elektronischer Chip (100) nach einem der vorstehenden Ansprüche, der weiter mindestens zwei erste leitfähige Durchgangsverbindungen (124) beinhaltet, die das Substrat (102) durchqueren, und das Widerstandselement (122) elektrisch mit der elektronischen Schaltung (106) verbinden.

10. Elektronischer Chip (100) nach einem der Ansprüche 1 bis 8, der weiter ein induktives Element beinhaltet, das im Bereich der Vorderseite (104) des Substrats (102) angeordnet ist, und elektrisch an die elektronischen Schaltung (106) angeschlossen ist, und wobei das Widerstandselement (122) Teil einer RLC-Schaltung ist, die imstande ist, induktiv mit dem induktiven Element gekoppelt zu werden, sodass eine Änderung eines Werts einer Induktivität des induktiven Elements eine Änderung einer elektrischen Eigenschaft der RLC-Schaltung induziert.

11. Elektronischer Chip (100) nach Anspruch 10, wobei das induktive Element in die elektronische Schaltung (106) integriert ist.

12. Elektronischer Chip (100) nach einem der Ansprüche 10 oder 11, wobei das Motiv des Widerstandselements (122) in einer parallelen Ebene zur Rückseite (117) des Substrats (102) jenem einer Spule entspricht.

13. Elektronischer Chip (100) nach einem der vorstehenden Ansprüche, der weiter mindestens eine zweite Durchgangsverbindung (128) und/oder einen Graben beinhaltet, der die Rückseite (117) des Substrats (102) und einen Teil der Dicke des Substrats (102) durchquert, und mindestens gegenüber der elektronischen Schaltung (106) angeordnet ist, sodass eine Bodenwand der zweiten Durchgangsverbindung (128) und/oder des Grabens um einen Abstand ungleich null von der elektronischen Schaltung (106) beabstandet ist.

14. Verfahren zum Herstellen eines elektronischen Chips (100), das mindestens die folgenden Schritte beinhaltet:
- Herstellen einer elektronischen Schaltung (106) im Bereich einer Vorderseite (104) eines Substrats (102);
- Herstellen einer ersten Schutzschicht (120) auf einer Rückseite (117) des Substrats (102);
- Herstellen von mindestens einem Widerstandselement (122) auf der ersten Schutzschicht (120) und gegenüber mindestens einem Teil (110) der elektronischen Schaltung (106), wobei das Widerstandselement (122) mechanisch durch die erste Schutzschicht (120) getragen wird, und elektrisch und/oder induktiv an die elektronische Schaltung (106) angeschlossen ist, sodass eine Änderung des Werts des elektrischen Widerstands des Widerstandselements (122) von der elektronischen Schaltung (106) erkannt werden kann;
- Herstellen einer zweiten Schutzschicht (126), die mindestens das Widerstandselement (122) und die erste Schutzschicht (120) abdeckt, und derart, dass die Seitenwände der ersten und zweiten Schutzschicht zugänglich sind, um bei einer chemischen Ätzung geätzt zu werden;
und wobei:
- die erste Schutzschicht (120) mindestens ein dielektrisches Material beinhaltet, das einen Widerstand gegenüber einer chemischen Ätzung durch mindestens ein chemisches Ätzmittel kleiner oder gleich jenem eines dielektrischen Materials der zweiten Schutzschicht (126) aufweist,
- die dielektrischen Materialien der ersten und zweiten Schutzschicht (120, 126) Polymere sind,
- das chemische Ätzmittel einer Lösung auf Grundlage von KOH und/oder TMAH und/oder einer Flusssäure und/oder einer Salpetersäure entspricht,
- das Widerstandselement (122) mindestens eine Leiterbahn beinhaltet, die mindestens ein Rohrschlangenmotiv aufweist, und
- der Widerstand gegenüber einer chemischen Ätzung durch das mindestens eine chemische Ätzmittel und die Dicke einer jeden der ersten und zweiten Schutzschicht (120, 126) derart sind, dass die erste Schutzschicht (120) durch Ätzen vor der zweiten Schutzschicht (126) zerstört wird.

## Claims

1. Electronic chip (100) comprising at least:
- an electronic circuit (106) arranged at a front face (104) of a substrate (102);
- a first protective layer (120) arranged on a rear face (117) of the substrate (102);
- a resistive element (122) arranged on the first protective layer (120) and facing at least one part (110) of the electronic circuit (106), mechanically supported by the first protective layer (120) and connected electrically and/or in an inductive manner to the electronic circuit (106) such that a modification of the value of the electrical resistance of the resistive element (122) can be detected by the electronic circuit (106);
- a second protective layer (126) covering at least the resistive element (122) and the first protection layer (120) and such that the lateral walls of the first and second protective layers can be accessed to be etched during a chemical etching;
and in which:
- the first protective layer (120) comprises at least one dielectric material having a resistance to chemical etching by at least one chemical etching agent less than or equal to that of a dielectric material of the second protective layer (126),
- the dielectric materials of the first and second protective layers (120, 126) are polymers,
- the chemical etching agent corresponds to a solution comprising KOH and/or TMAH and/or hydrofluoric acid and/or nitric acid,
- the resistive element (122) comprises at least one conducting track having at least one serpentine pattern, and
- the resistance to chemical etching by said at least one chemical etching agent and the thickness of each of the first and second protective layers (120, 126) are such that the first protection layer (120) is eliminated by etching before the second protective layer (126).

2. Electronic chip (100) according to claim 1, in which at least the dielectric material of the second protective layer (126) is resistant to mechanical polishing and has a Young's modulus greater than or equal to around 1 GPa, and/or is opaque towards infrared radiation and comprises a coefficient of transmission of an infrared radiation less than around 20 % towards the infrared radiation, and/or is resistant to an attack by focused ion beam such that a speed of abrasion by the focused ion beam is less than around 0.5 µm/min for an attack window of dimensions 50 × 50 µm².

3. Electronic chip (100) according to one of previous claims, in which the dielectric material of the first protective layer (120) and/or the dielectric material of the second protective layer (126) is a polymer comprising epoxy and/or silicone.

4. Electronic chip (100) according to one of previous claims, in which the first protective layer (120) and/or the second protective layer (126) further comprises particles of a first material different to the dielectric material of the first protective layer (120) and/or the dielectric material of the second protective layer (126), and which are spread out in the whole of the dielectric material of the first protective layer (120) and/or the dielectric material of the second protective layer (126).

5. Electronic chip (100) according to claim 4, in which the first material of the particles comprises silica and/or alumina.

6. Electronic chip (100) according to one of claims 4 or 5, in which the first material of the particles is covered with a second reflective material towards light and/or electronic and/or ionic radiation.

7. Electronic chip (100) according to one of previous claims, in which the conducting track having has a width comprised between around 5 µm and 50 µm, and/or in which portions of the conducting track which are next to and parallel to each other are spaced apart by a distance comprised between around 5 µm and 50 µm.

8. Electronic chip (100) according to one of the previous claims, further comprising an electrically conducting layer (119) arranged between the rear face (117) of the substrate (102) and the first protective layer (120).

9. Electronic chip (100) according to one of previous claims, further comprising at least two first conducting vias (124) made through the substrate (102) and electrically connecting the resistive element (122) to the electronic circuit (106).

10. Electronic chip (100) according to one of claims 1 to 8, further comprising an inductive element arranged at the front face (104) of the substrate (102) and electrically connected to the electronic circuit (106), and in which the resistive element (122) forms part of a RLC circuit capable of being coupled in an inductive manner with said inductive element such that a modification of a value of an inductance of the inductive element induces a modification of an electrical property of the RLC circuit.

11. Electronic chip (100) according to claim 10, in which the inductive element is integrated in the electronic circuit (106).

12. Electronic chip (100) according to one of claims 10 or 11, in which the pattern of the resistive element (122), in a plane parallel to the rear face (117) of the substrate (102), corresponds to that of a coil.

13. Electronic chip (100) according to one of the previous claims, further comprising at least one second via (128) and/or a trench made through the rear face (117) of the substrate (102) and a part of the thickness of the substrate (102), and arranged at least facing the electronic circuit (106) such that a bottom wall of the second via (128) and/or of the trench is spaced apart from the electronic circuit (106) by a non-zero distance.

14. Method for producing an electronic chip (100) comprising at least the steps of:
- producing an electronic circuit (106) at a front face (104) of a substrate (102);
- producing a first protective layer (120) on a rear face (117) of the substrate (102);
- producing at least one resistive element (122) on the first protective layer (120) and facing at least one part (110) of the electronic circuit (106), the resistive element (122) being mechanically supported by the first protective layer (120) and connected electrically and/or in an inductive manner to the electronic circuit (106) such that a modification of the value of the electrical resistance of the resistive element (122) can be detected by the electronic circuit (106);
- producing a second protective layer (126) covering at least the resistive element (122) and the first protection layer (120) and such that the lateral walls of the first and second protective layers can be accessed to be etched during a chemical etching;
and in which:
- the first protective layer (120) comprises at least one dielectric material having a resistance to chemical etching by at least one chemical etching agent less than or equal to that of a dielectric material of the second protective layer (126)
- the dielectric materials of the first and second protective layers (120, 126) are polymers,
- the chemical etching agent corresponds to a solution comprising KOH and/or TMAH and/or hydrofluoric acid and/or nitric acid,
- the resistive element (122) comprises at least one conducting track having at least one serpentine pattern, and
- the resistance to chemical etching by said at least one chemical etching agent and the thickness of each of the first and second protective layers (120, 126) are such that the first protection layer (120) is eliminated by etching before the second protective layer (126).
